# EUROPEAN PATENT APPLICATION

(11) **EP 1 562 257 A1**
(43) Date of publication of application: **10.08.2005**
(21) Application number: 04002712.0
(22) Date of filing: 06.02.2004
(51) Int. Cl.: H01Q 1/24, H01Q 3/04, H01Q 3/26, H04B 5/00, H04Q 7/36

(54) **Antenna motion tracking for short range wireless mobile communication system**

(71) Applicant: Sony International (Europe) GmbH, 10785 Berlin (DE)
(72) Inventor: Uno, Masahiro, 70327 Stuttgart (DE); Nikolajevic, Vladimir, 70327 Stuttgart (DE)
(74) Representative: Körber, Martin, Dipl.-Phys.

(57) **Abstract**

A wireless mobile communication system is provided with a first terminal (1) and a mobile terminal (2) is provided, whereby the first terminal and the mobile terminal each have a transceiving means (1a, 7, 2a, 8) for sending and receiving an information carrying signal wave, and whereby the transceiving means of at least the first terminal or the mobile terminal is equipped with a controllable directional signal wave converter (1a) for a direction sensitive transmission and reception of an information carrying signal wave. The wireless mobile communication system further comprises a movement monitoring means (13) for monitoring a movement of the mobile terminal relative to the first terminal and a direction adjustment means (4) for adjusting the directional characteristic of the controllable directional signal wave converter according to the movement of the mobile terminal relative to the first terminal as monitored by the movement monitoring means.

## Description

The present invention relates to a signal transmission in short range wireless communication systems wherein at least one of the communication terminals is subject to move with a random movement pattern.

A short range wireless communication system commonly forms an integral part of a short range wireless network, where an access point terminal is provided to enable one or more mobile terminals to wirelessly connect to the network. The range of a respective system is usually limited to a few metres like, e.g. about 10 metres. Short range wireless communication is further utilised in wireless ad-hoc networks, where wireless links can be established directly between two nodes like e.g. a Personal Digital Assistant and a printing or displaying device.

Basing a short range wireless communication on links established between a transmitter and a receiver with each having an omnidirectional characteristic, jeopardizes the quality of the thus implemented signal transmission - primarily due to multipath fading. This is caused by the information carrying signal wave like e.g. a radio or light wave not only propagating along the direct path from a transmitter to a receiver through free-space, but more likely along a multitude of additional and alternative paths by being reflected, refracted or scattered off objects within the transmission range. The amplitude of each individual signal wave is attenuated according to the loss along its path. The signal waves from the different paths add destructively for most of the part, thereby degrading the received signal for instance by causing intersymbol interference.

The quality of the signal transmission is improved by using at least one directional signal wave converter. This means, that the signal transmitter and/or the signal receiver of a short range wireless communication link show a directional radiation pattern which is oriented into the direction of a low-loss transmission path with no or little interference. A respective path will in the following be referred to as 'direct link path'.

The term 'signal wave converter' as used in this specification describes a means for converting a space wave into a line bound wave and/or vice versa. Its physical embodiment depends on the type of wireless signal transmission used. For a wireless signal transmission based on radio waves, a signal wave converter takes on the form of an antenna. The antenna converts a signal supplied to it in form of a line bound wave by a feeding line into a sky wave or space wave, respectively, which is emitted into the space or a space segment around the antenna. At receiving a sky wave, the antenna converts the sky wave into a line bound wave propagating through the connecting line to the signal processing circuitry. In the case of a wireless communication being based on an optical transmission of signals, a signal wave converter is typically formed by an electro-optical device or optical coupler, which convert a light propagating through open space into a signal wave propagating through an electrical line or optical fibre or vice versa.

Most of the single element antennae have an omnidirectional radiation pattern, i.e. the radiation pattern or gain of these antennae is substantially angular-independent. The term radiation pattern hereby refers to both, the angular emission as well as the angular reception characteristic of a signal wave converter. A directional antenna can be achieved by combining more than one single antenna elements to an array.

A directional radiation characteristic, i.e. the gain of the respective device is an angular function. But a quasi omnidirectional radiation characteristic can be achieved by using a suitable additional optic.

A directional signal wave converter is sometimes referred to as a sharp beam signal wave converter indicating that the space wave radiation is received from or transmitted into a limited solid angle only. A signal wave converter with an omnidirectional radiation pattern is likewise often referred to as a wide beam signal wave converter for making reference to the practically direction-independent sensitivity of the converter.

Using a directional signal wave converter requires a tracking of a direct link path when at least one of the wirelessly linked terminals is subject to move. Hereby the main lobe or radiation angle, respectively, of the signal wave converter is aligned into the direction of the direct link path, i.e. the signal wave converter is oriented to emit or receive signals with maximum intensity into or from the direction of the direct link path. This is usually achieved by either changing the orientation of a directional signal wave converter mechanically or by using an adaptive signal wave converter array, wherein many converter elements forming an array are interconnected through phase shifters with each individual phase shift being tuned to achieve the desired angular radiation pattern of the array. Both types of signal wave converters will in the ongoing be addressed as steering converters in close relation to the common steering antenna for radio waves.

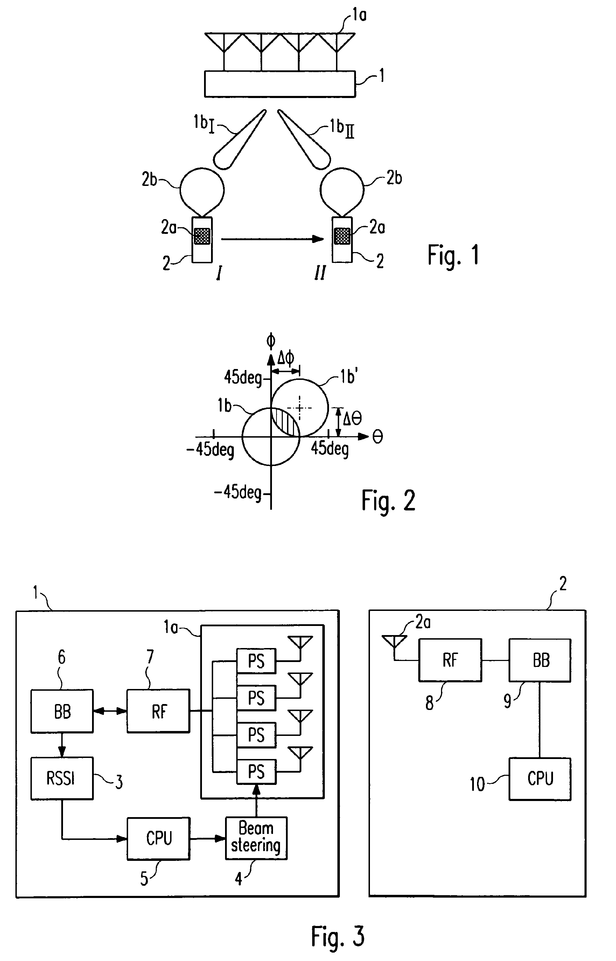

Assumed, that a communication of sufficient link budget is to be set-up between a mobile terminal which is equipped with an omnidirectional signal wave converter and a further terminal with a directional signal wave converter, then the directional signal wave converter has to be controlled for its main lobe constantly tracking the movement of the mobile terminal to be at any time aligned with the direct link path as schematically shown in Figure 1. The generic term 'link budget' in this context describes a series of mathematical calculations designed to model the performance of a communication link with respect to signal strength and noise power. In the following, the terminal denoted as further terminal above will be referred to as access point as this is the usual configuration in short range wireless networks. But it is clear from the explained above that any type of terminal can substitute an access point.

In most cases a realignment of the radiation angle, i.e. the direction of maximum power of the main lobe has to be made for a three-dimensional movement of the mobile terminal. This means that the radiation angle of a signal wave converter has to be changed in the vertical as well as in the horizontal plane. In other words, both, the azimuth (φ) and the elevation angle (θ) of the radiation angle have to be adapted for tracking the movement of the mobile terminal. But the adaptation must not necessarily be performed continuously. For covering all possible directions, the radiation angle only has to be aligned in certain steps defined by the half power beam width (HPBW), i.e. the opening angle of the main lobe defined by the angular range wherein the radiation power has -3dB reduction from the maximum.

A tracking of the mobile terminal is currently achieved by a system which is illustrated in form of a schematic block diagram in Figure 3. The corresponding frame structure is shown in Figure 4 and the procedure followed by the system in Figure 5. After a communication link is established between the access point and the mobile terminal, a first burst (Burst 1) is transmitted from the access point to the mobile terminal whereby the radiation angle of the access point's signal wave converter is in a first position (#0). The mobile terminal receives the data contained in the burst and determines from it the RSSI (Received Signal Strength Indicator) value and the FER (Frame Error Rate). Following the first burst, the mobile terminal transmits a second burst (Burst 2) which is used by the access point to perform an RSSI and possibly a FER measurement for various radiation angles (e.g. #1 to #6 in Figure 13) of its steering signal wave converter. The main lobe direction with the best RSSI (and FER, if measured) performance is then used for the subsequent data transmission beginning with Burst 3 transmitted from the access point to the mobile terminal.

The time duration of Burst 2 depends on the number of the beam directions for the RSSI measurements tested by the access point. The more possible radiation directions are to be tested, the longer the time period which will be required for Burst 2. If, e.g. the HPBW of the access point's main lobe is such, that 7 beam directions are necessary to cover all possible directions between the access point and the mobile terminal, the time period required for Burst 2 is seven times the time required to perform the measurements for determining the communication link quality and to readjust the radiation angle to a new direction. This means that it is necessary to shrink the payload length and that the overhead of the system is expanded.

Particularly in case of a mechanical steering, a realignment of the radiation angle is rather slow due to the speed limitation of the mechanical function. Therefore it might not be possible to check all possible directions of the signal wave converter but only one in one Burst 2 which means that the number of successive Bursts 2 required for the readjustment corresponds to the number of possible directions which have to be checked. That makes the tracking speed slow.

It is therefore an object of the present invention to provide a radiation pattern tracking according to a movement of a mobile terminal in a wireless communication system with a reduced system overhead.

This object is achieved by the invention as defined in the independent claims.

Accordingly a wireless mobile communication system with a first terminal and a mobile terminal is provided, whereby the first terminal and the mobile terminal each have a transceiving means for sending and receiving an information carrying signal wave, and whereby the transceiving means of at least the first terminal or the mobile terminal is equipped with a controllable directional signal wave converter for a direction sensitive transmission and reception of an information carrying signal wave. The wireless mobile communication system further comprises a movement monitoring means for monitoring a movement of the mobile terminal relative to the first terminal and a direction adjustment means for adjusting the directional characteristic of the controllable directional signal wave converter according to the movement of the mobile terminal relative to the first terminal as monitored by the movement monitoring means.

The above object is further achieved by a mobile terminal for a short range wireless communication system according to the present invention, whereby the mobile terminal comprises a transceiving means for wirelessly exchanging a signal, a baseband processing means for processing a received or to be transmitted signal in the baseband, and a movement monitoring means for providing tracking data to the baseband processing means for being transmitted by the transceiving means.

Further, the above object is achieved by a first terminal for a short range wireless communication system according to the present invention, whereby the first terminal comprises a transceiving means with a directional signal wave converter for receiving and transmitting data, a baseband processing means for a baseband processing of data received or of data to be transmitted and to extract tracking data provided by a mobile terminal according to the present invention, and a direction adjustment means for adjusting the radiation angle of the directional signal wave converter according to the information present in the tracking data.

Aligning the radiation angle of the directional signal wave converter based on a monitoring of the mobile terminal's movement relative to the first terminal spares the checking out of all possible orientations which considerably reduces the time required for the realignment. Further, by continuously monitoring the movement of the terminals relative to each other, the present invention enables faster overall tracking speed and also a use of mechanically steered directional signal wave converters.

Advantageous embodiments of the present invention are the subject of the respective sub-claims.

With the first terminal being formed as a stationary terminal, the movement monitoring means can be advantageously reduced to monitoring the movement of the mobile terminal only.

By placing the movement monitoring means on the mobile terminal and/or the first terminal, a movement of the respective terminal is favourably registered directly. A registration of the movement can be effectively accomplished by the movement monitoring means comprising a sensor means which is adapted to provide one or more electrical signals corresponding to one or more physical quantities which are related to a movement of the mobile terminal relative to the first terminal. The sensor means may hereby further advantageously comprise an acceleration sensor for providing an electrical signal indicating an acceleration value associated with a movement of the terminal housing the sensor means, since any change in the velocity or direction of a movement is associated with an acceleration. In a preferred embodiment of the present invention, the sensor means is equipped with a gyroscope sensor adapted to provide an electrical signal indicating an orientation value associated with the movement of the terminal housing the sensor means thus enabling an easy compensation of the radiation angle with respect to the rotational portion of the terminal's movement.

Preferably, the movement monitoring means provides tracking data to a direction calculation means, whereby the tracking data are based on a movement monitored for a terminal which houses the respective movement monitoring means. This enables an easy to perform numerical calculation of a required direction alignment of one or more signal wave converters according to the movement as monitored. To achieve the correct alignment of the directional signal wave converter at the time of the next following data exchange, the direction calculation means estimates the position of the mobile terminal relative to the first terminal for the time of the next following exchange of information carrying signals. A versatile direction control is achieved by the direction calculation means providing a control signal to the direction adjustment means which is based on the tracking data and which is adapted to adjust the controllable directional signal wave converter such that a reliable signal transmission is achieved.

As multipath interference can already be avoided by either directing the transmitted signal along a direct link path or by aligning the radiation angle of the receiving signal wave converter along a direct link path, a reliable data transmission can be effected by the mobile terminal comprising an omnidirectional signal wave converter and the first terminal comprising a controllable directional signal wave converter or alternatively by the first terminal comprising an omnidirectional signal wave converter and the mobile terminal comprising a controllable directional signal wave converter.

Particularly, when a wide range for adjusting the radiation angle is required, the controllable directional signal wave converter is preferably formed by a mechanical steerable directional signal wave converter. For a fast scan speed of the radiation angle alignment, the controllable directional signal wave converter is advantageously formed by an adaptive signal wave converter array.

The information carrying signal wave is preferably either formed by a light wave or by a radio wave as both media are perfectly suited for a short range wireless communication. Particularly, when the communication is based on radio waves, the signal wave converter is effectively formed by an antenna, while for a light wave based communication electro-optical devices are preferred as part of the signal wave converters.

In the following description, the present invention is explained in more detail with respect to special embodiments and in relation to the enclosed drawings, in which
- Figure 1: is a schematic overall view of a short range communication system with a steering antenna for tracking a mobile terminal,
- Figure 2: shows the relation between radiation range, half power beam width, and radiation angle in the azimuth-elevation-angle-plane,
- Figure 3: shows a block diagram of a prior art beam steering system,

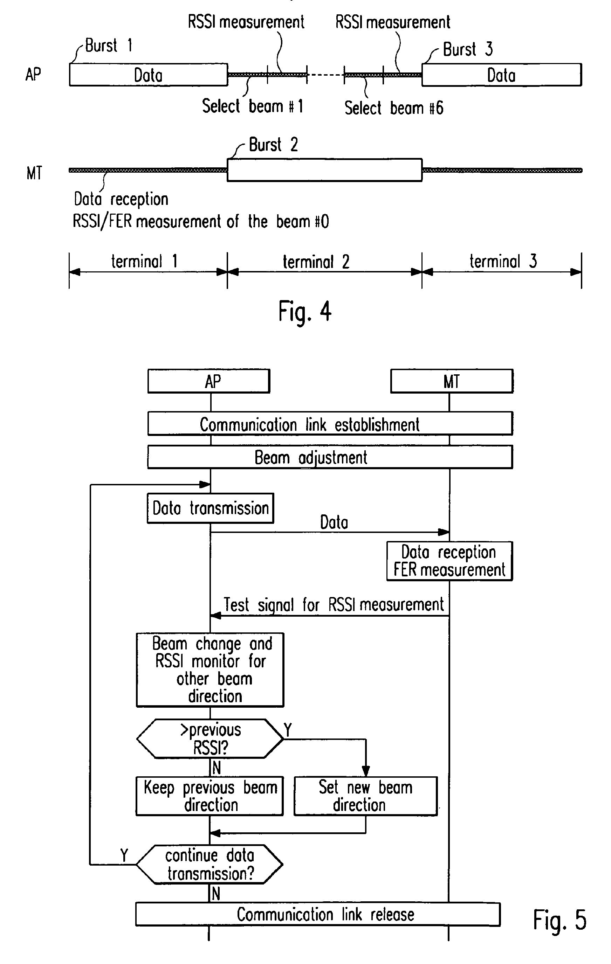

- Figure 4: shows a frame structure of a prior art beam tracking system,
- Figure 5: shows the processing steps of a prior art beam tracking method,

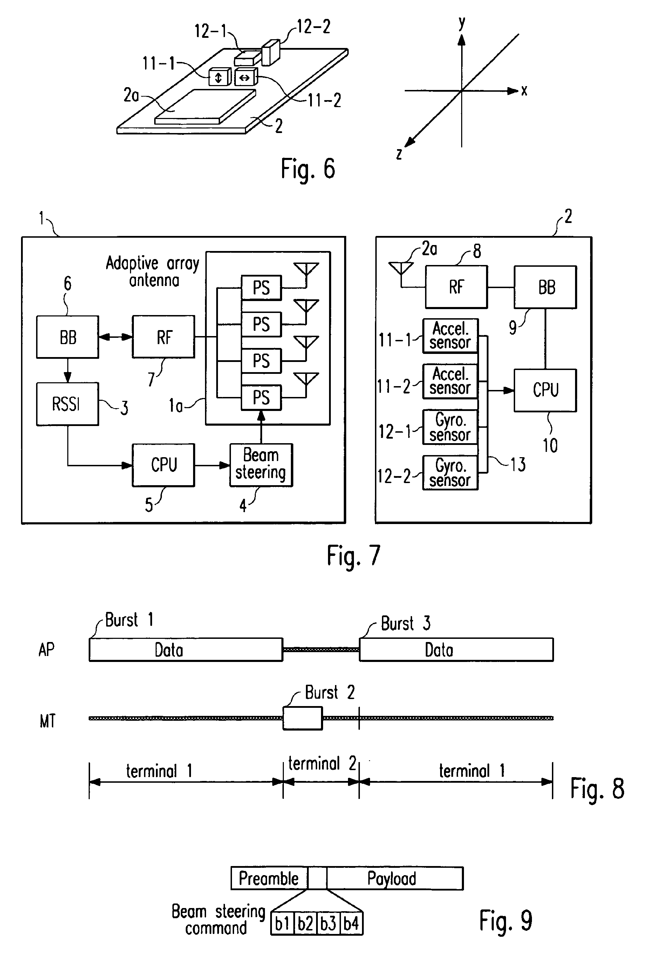

- Figure 6: shows a mechanical arrangement corresponding to a sensor means according to the present invention,
- Figure 7: shows a block diagram of tracking system according to the present invention,
- Figure 8: shows a frame structure of a tracking system according to the present invention,
- Figure 9: shows the components of a burst used for tracking purposes according to the present invention,

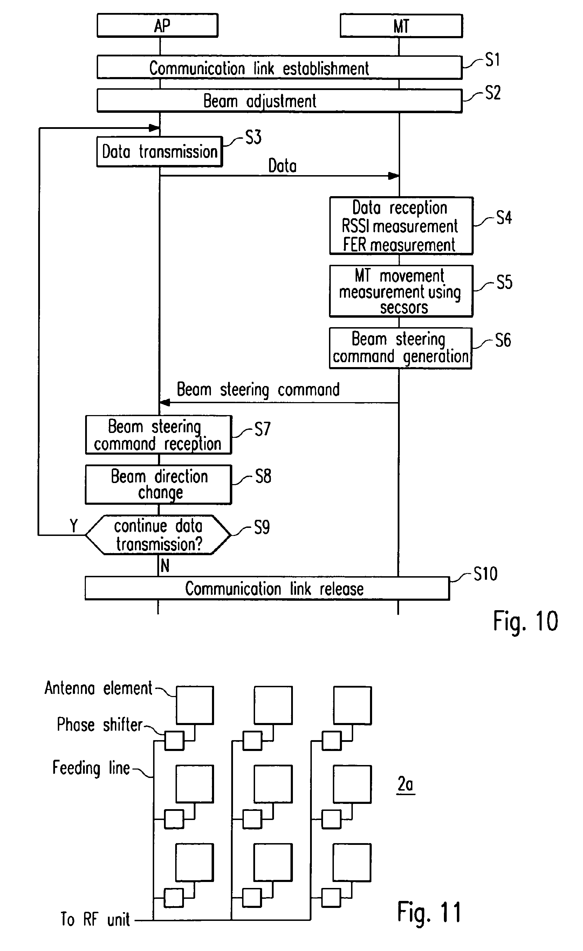

- Figure 10: shows the processing steps of a beam tracking method according to the present invention,
- Figure 11: shows an example of an adaptive antenna array,

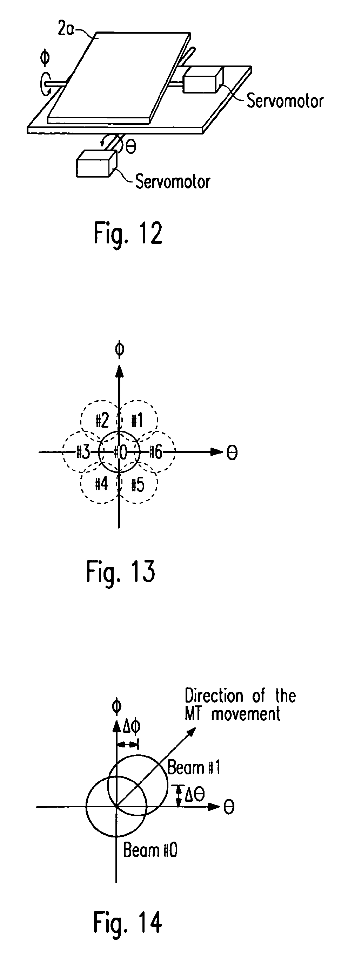

- Figure 12: shows an example of a mechanical beam steering antenna,
- Figure 13: shows the coverage of a certain radiation range with a limited number of radiation angles in the azimuth-elevation-angle-plane, and
- Figure 14: illustrates the concept of relative beam realignment in the azimuth-elevation-angle-plane.

Figure 1 illustrates the principle concept of beam tracking as it is required for a reliable short range communication system, i.e. a low-loss, low-signal-interference communication characterised by a high RSSI value and a low FER. A first terminal 1, formed for instance by an access point to a wired network, transmits and receives signals to and from a mobile terminal 2 by means of a signal wave converter 1a with a directional radiation characteristic. The mobile terminal 2 likewise contains a signal wave converter 2a, but in the example shown in Figure 1 of omnidirectional radiation characteristic 2b. While the mobile terminal 2 moves from a first position I to a second position II, the directional radiation characteristic 1b_{I} of the first terminal's signal wave converter 1a is realigned to a directional radiation characteristic 1b_{II} with its main lobe now being adjusted into the direction of the mobile terminal in position II. In other words, while the mobile terminal moves from position I to position II, the radiation angle of the signal wave converter 1a follows the movement until finally being oriented to the second position II.

The example shown assumes, that the transmitted signal on which the communication is based can propagate unimpeded from the transmitter to the receiver through free space. In case that the transmission along the line-of-sight is disabled by some objects, the directional radiation characteristics 1b_{I} and 1b_{II}, respectively, will be aligned along a respective direct link path as explained above. Further, the antenna arrangement as shown in Figure 1 is not obligatory. It is also possible to use a signal wave converter 2a with a directional radiation characteristic on the mobile terminal 2 and an omnidirectional signal wave converter 1a at the first terminal 1, or even directional signal wave converters on both terminals.

A short range wireless communication as shown in Figure 1 is usually based on a signal transmission using light or radio waves as carrier.

When using radio transmission, the signal wave converters 1a and 2a have the form of an antenna. Usually vertical antenna or patch like antennae are used for implementing an omnidirectional or wider beam radiation characteristic. Directional antennae have most different designs, whereby usually phased array antennae are preferred for their small size. The control of the radiation angle is hereby either achieved by mechanically tilting the antenna array or by tilting each element of the array as e.g. described in "A V-Band Micromachined 2-D Beam-Steering Antenna Driven by Magnetic Force With Polymer-Based Hinges, Chang-Wook et al, IEEE transactions on microwave theory and techniques, Vol. 51, No. 1, January 2003" which is herewith incorporated by reference, or by tuning the phase shifts for each antenna element to pivot the radiation angle of the array.

When using optical signal transmission, the signal wave converter for transmitting a signal is different from that receiving the signal. For a transmission, devices that convert electrical energy into optical radiation, i.e. light emitting devices, are generally preferred like e.g. LED's or laser diodes. For a reception of optical signals photovoltaic detectors converting optical radiation into electrical energy like above all a photodiode is usually put to use.

Currently light emitting devices in general show a directional characteristic. For modifying the radiation angle, either the whole device has to be tilted or the light ray has to be deflected by a tiltable mirror or array of mirrors. The emission angle of a light emitting device can be modified by a lens or a set of lenses to form a narrow or a wide beam. An omnidirectional characteristic is in general only achievable with a set of differently oriented devices, special optics and/or scattering elements.

Most of the conventional photovoltaic detectors have a nearly hemispherical (ir)radiation characteristic. To get a small angle or sharp beam response, some optic is placed in front of it. The deflection of the radiation angle, i.e. the direction of the solid angle from which irradiation is accepted, may be achieved by either directly tilting the device or by using a mirror or array of mirrors enabling a pivoting of the radiation angle into the reception path.

Beam tracking does not necessarily imply that the radiation angle of the directional signal wave converter has to be exact in line with the current direct link path. Each directional radiation characteristic can be described by a main lobe, i.e. the angular distribution of the emitted or received energy, with a beam width angle defined by the HPBW. Movements within the HPBW of the signal wave converter result in practically small changes of the transmission quality as e.g. defined by an RSSI value. A realignment based on a determination of a transmission quality value will therefore most likely take place in discrete steps as shown in Figure 2, wherein the coverage of an extended space segment with only two radiation angles (position I with φ=0°=θ and position II with φ=22.5°=θ) is shown for an HPBW of 45°. While a mobile terminal 2 moves from position I to position II, the first terminal 1 will regularly check the transmission quality by the RSSI determination means 3, which will only drop significantly when the mobile terminal 2 moves close to the edge of the main lobe 1b_{I} for the first position I. Only then the radiation angle will be realigned for the new position II with a corresponding main lobe 1b_{II}, which is only possible after some alternative beam directions have been checked additionally as described above with respect to Figures 4 and 5.

The present invention uses a movement monitoring means for monitoring any movement of the mobile terminal 2. If the first terminal 1 is also subject to move, the monitoring means will likewise monitor the movements of this terminal. In any case, the relative movement of the mobile terminal 2 with respect to the first terminal 1 is monitored.

The movement monitoring means may use a GPS (Global Positioning System) for getting the position of the mobile terminal and/or the first terminal, if required. But the poor precision of this positioning system makes it regularly unsuitable for short range wireless communications if no additional means to improve the precision are employed too. Short range positioning systems like for instance indoor positioning systems are therefore preferred due to their higher precision.

In a preferred embodiment of the present invention, sensor means located within the mobile terminal 2 and, provided that the first terminal 1 is also subject to move likewise within this terminal, are used to determine the movement of the two terminals relative to each other. The sensor means is adapted to sense physical quantities related to a movement and to provide one or more electrical output signals corresponding to the current values of the sensed physical quantities.

Figure 6 shows an example for a sensor means according to the present invention using two different types of mechanical sensors, namely acceleration sensors 11-1 and 11-2, and gyroscope sensors 12-1 and 12-2 for enabling a respective motion tracing. Each individual sensor of a pair of the same type is oriented in a different, preferably orthogonal direction to the respective other for to obtain the values of the same physical quantity but for a different degree of freedom. Depending on the types of sensors used, only one sensor may be sufficient hereto, but also more than two individual sensors of the same type may be required as distinct from the example illustrated in Figure 6.

Figure 7 shows a schematic representation of an example for a short range wireless mobile communication system based on radio wave transmission according to the present invention. The mobile terminal 2 houses the movement monitoring means 13 containing a pair of acceleration sensors 11-1 and 11-2 and a pair of gyroscope sensors 12-1 and 12-2. The movement monitoring means 13 provides tracking data to the CPU 10 (Central Processing Unit) of the mobile terminal 2. The tracking data contain information regarding the current movement of the mobile terminal 2. In a simple embodiment, the tracking data only represent the output of the sensors 11-1 to 12-2 in a digital format, which are then processed by the CPU 10 to calculate the movement of the mobile terminal 2 like e.g. current position, direction vector, velocity vector and acceleration vector or the like. The CPU 10 can thus be considered as an integral part of the movement monitoring means.

In a further embodiment the movement monitoring means 13 as shown in Figure 7 already pre-processes the data obtained from the sensor means before providing it to the CPU 10. In this case, the pre-processed data represent a form of description of the current movement of the mobile terminal 2. The CPU 10 may then use this data to calculate the most likely position of the mobile terminal 2 at the time of the next signal transmission from the first terminal 1. The CPU 10 supplies the tracking data or processed tracking data, respectively, to the baseband circuitry 9 where they are integrated as a steering command in a burst 2 which is next modulated on a radio frequency in the RF-circuitry 8 and finally transmitted via the antenna 2a to the first terminal 1.

The signal containing burst 2 is received by the first terminal 1 via antenna 1a. After being demodulated in the RF-circuitry 7 and processed in the baseband circuitry 6, an RSSI value is determined on the base of the thus demodulated burst 2 in the transmission quality determination means 3. The steering command is extracted from burst 2 by the CPU 5 of the first terminal and a respective control signal is provided to the direction adjustment means 4 controlling the adjustable directional antenna 1a.

In an alternative embodiment of the present invention, the direction calculation is completely handled on the first terminal 1. From the mobile terminal 2 only data regarding the direction of the movement are received while the CPU 5 acting as a direction calculation means determines the required orientation of the directional antenna 1a for the next data transmission. By recording the past movement of the mobile terminal 2 for a certain period, the direction calculation means is also able predict the next radiation angles of the antenna 1a required for signal transmissions in the near future through extrapolation.

For the directional steering antenna 1a shown in Figure 7 an adaptive array antenna is used. It also possible to use a mechanical beam steering antenna instead. The mobile terminal 2 of Figure 7 is equipped with an omnidirectional antenna. It is also possible to have a directional steering antenna on the mobile terminal, while the first terminal utilises an omnidirectional antenna. Further, both terminals may be equipped with a directional steering antenna which implies, that both terminals comprise a direction adjustment means 4. This is particularly useful for a short range communication between a multitude of terminals where each terminal alternately communicates directly with various other terminals so that different pairs of terminals are enabled to exchange information at the same time without signal interference from other terminals.

If also the first terminal 1 is subject to move, the movement monitoring means additionally has to monitor the movement of this terminal, since the correct alignment of a directional antenna is a function of the relative movement of the linked terminals with respect to each other. The movement monitoring means 13 is hereto preferably composed of two components 13, one located on the first terminal 1 and the other on the mobile terminal 2. The motion related data are then exchanged between the two terminals and the received data are on each terminal used together with the data obtained from the local component 13 to monitor the relative movement and to calculate the steering command for the directional steering antenna. Of course, if only one terminal is equipped with a directional steering antenna, the calculation is limited to this terminal and the other terminal only has to transmit its motion related data.

Figure 8 shows a frame structure for a beam tracking according to the present invention as it is preferably implemented by the system of Figure 7. The upper frames are the ones to be transmitted by the first terminal 1, the lower frames are to be transmitted by the mobile terminal 2. The first data burst 1 transmitted by the first terminal 1 is received on the mobile terminal and used there to determine the RSSI value and the FER for the current beam direction - i.e. the current radiation angle of the directional antenna. The movement of the mobile terminal 2 is monitored simultaneously resulting in a generation of related tracking data or, like in the example given in Figure 9, in a direct generation of a steering command. Following burst 1, the mobile terminal 2 transmits to the first terminal 1a second burst 2 containing the steering command. On the first terminal 1 the directional antenna is then realigned accordingly before the next data are going to be transmitted to the mobile terminal 2 with burst 3.

As can be seen from the detailed illustration of in Figure 9, burst 2 is composed of a preamble, the steering command and a payload. In a preferred embodiment of the present invention, the steering command consist of only four digits, namely b1, b2, b3, and b4, which represent the antenna realignment values as shown in tables 1 below.

A steering command according to the representation of Figure 9 and Tables 1 therefore contains only values for an incremental change in the azimuth Δφ and in the elevation angle Δθ of the antenna orientation. If no realignment is required, b1 like b2, b3 and b4 = 0. An incremental change in the positive direction is achieved for the azimuth with b1=0 and b2=1; for a change in the negative direction b1=1 and b2=0. Incremental changes of the elevation angle are controlled analogously.

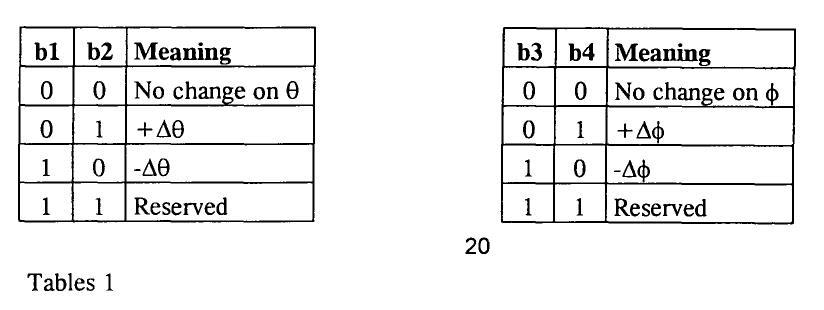

As the steering is based on the monitoring of the relative movement of the mobile terminal 2 with respect to the first terminal 1, the incremental changes Δφ and Δθ can be smaller than the HPBW of the directional antenna. Figure 13 shows the beam directions obtained when based on a RSSI determination like in the prior art. The space covered in the example corresponds to a beam width of about 3 times the HPBW of the radiation characteristic and, as clearly visible, Δφ and Δθ each are identical to the HPBW. With the present invention Δφ as well as Δθ can be kept much smaller than the HPBW of the directional antenna used, thus enabling the utilisation of mechanical steering antennae which would otherwise be too slow to perform a HPBW-sized Δφ and/or Δθ within the required time.

Figure 10 shows the procedural sequence of a beam steering according to the present invention. The actions taken on the first terminal 1 are indicated on the left branch, the actions taken on the mobile terminal 2 are indicated on the right branch. The initial establishment of the communication (step S1) and the initial beam adjustment (step S2) is accomplished as in the prior art which is shown in Figure 5. The data transmitted from the first terminal 1 (AP) to the mobile terminal 2 (MT) in step S3 are used on the mobile side to measure the RSSI value and FER for a transmission quality determination in step S4. From the simultaneous or subsequent sensor based measurement of the mobile terminal's 2 movement in step S5, the steering command is calculated in step S6 and transmitted to the first terminal 1 as described above.

There, the steering command is received in step S7 and the radiation angle of the steering antenna is correspondingly adjusted in step S8. If the data transmission is to be continued as checked in step S9, the next data are transmitted in the direction of the new radiation angle in step S3. Step S3 to S9 are repeated until the data transmission is to be discontinued resulting in a release of the communication link in step S 10.

It is to be noted, that what has been described with respect to antennae for radio based short range wireless communications is analogously applicable to electro-optical signal wave converters for a short range optical communication. The principle of a mechanical steering antenna sometimes also called a mechanical beam steering antenna is shown in Figure 12. The radiating element 2a - which can also be a reflecting surface for an optical beam antenna - can be tilted in one or in two orthogonal directions, depending on a tracking required only for one or for two dimensions. The tilt can e.g. be controlled by a servomotor, galvanometric drive or by any other means allowing a defined deflection.

An example for an adaptive antenna array is shown in Figure 11. It usually consists of a regular arrangement of antenna elements, each of which is connected to the RF circuitry by a phase shifter. By suitably shifting the phase of the RF signal at each antenna element individually, a directional characteristic with a controllable radiation angle is obtained. For an optical adaptive signal wave converter, phase shifter and antenna element are for instance replaced by a transparent liquid crystal filled electrode which refractive index is controlled by an electric potential applied. By changing the refractive index of a respective electrode, the phase of the light passing through the electrode is shifted.

The reduction of the time required to accomplish the beam tracking for tracing a mobile terminal is to be looked at as the main advantage of the present invention. But the present invention furthermore allows a finer graded realignment of a directional signal wave converter and the utilisation of mechanical steering signal wave converters even for rapidly moving terminals.

## Claims

1. A wireless mobile communication system with a first terminal (1) and a mobile terminal (2), whereby the first terminal (1) and the mobile terminal (2) each have a transceiving means (7, 8) for sending and receiving an information carrying signal wave, and whereby the transceiving means (7, 8) of at least the first terminal or the mobile terminal is equipped with a controllable directional signal wave converter (1a) for a direction sensitive transmission and reception of an information carrying signal wave,
**characterised by**
a movement monitoring means (13) for monitoring a movement of the mobile terminal (2) relative to the first terminal (1) and a direction adjustment means (4) for adjusting the directional characteristic of the controllable directional signal wave converter (1a) according to the movement of the mobile terminal (2) relative to the first terminal (1) as monitored by the movement monitoring means (13).

2. A wireless mobile communication system according to claim 1,
**characterised in**
**that** the first terminal (1) is a stationary terminal.

3. A wireless mobile communication system according to claim 1 or 2,
**characterised in**
**that** the movement monitoring means (13) is located on the mobile terminal (2) and/or on the first terminal (1).

4. A wireless mobile communication system according to claim 1, 2 or 3,
**characterised in**
**that** the movement monitoring means (13) comprises a sensor means (11-1, 11-2, 12-1, 12-2) for providing one or more electrical signals corresponding to one or more physical quantities related to the movement of the mobile terminal (2) relative to the first terminal (1).

5. A wireless mobile communication system according to claim 4,
**characterised in**
**that** the sensor means (11-1, 11-2, 12-1, 12-2) comprises an acceleration sensor (11-1, 11-2) for providing an electrical signal indicating an acceleration value associated with the movement of the terminal housing the sensor means.

6. A wireless mobile communication system according to claim 4 or 5,
**characterised in**
**that** the sensor means (11-1, 11-2, 12-1, 12-2) comprises a gyroscope sensor (12-1, 12-2) for providing an electrical signal indicating an orientation value associated with the movement of the terminal housing the sensor means.

7. A wireless mobile communication system according to any of the preceding claims,
**characterised in**
**that** the movement monitoring means (13) provides tracking data to a direction calculation means (5, 10), whereby the tracking data are based on a movement monitored for a terminal which houses the respective sensor means (11-1, 11-2, 12-1, 12-2).

8. A wireless mobile communication system according to claim 7,
**characterised in**
**that** the direction calculation means (5, 10) estimates the position of the mobile terminal (2) relative to the first terminal (1) for the time of the next following exchange of information carrying signals.

9. A wireless mobile communication system according to claim 7 or 8,
**characterised in**
**that** the direction calculation means (5, 10) provides a control signal to the direction adjustment means (4) which is based on the tracking data and adapted to adjust the controllable directional signal wave converter (1a) such that a reliable signal transmission is achieved.

10. A wireless mobile communication system according to any of the preceding claims,
**characterised in**
**that** the mobile terminal (2) comprises an omnidirectional signal wave converter (2a) and the first terminal (1) comprises a controllable directional signal wave converter (1a).

11. A wireless mobile communication system according to one of the claims 1 to 9,
**characterised in**
**that** the first terminal (1) comprises an omnidirectional signal wave
converter (2a) and the mobile terminal (2) comprises a controllable directional signal wave converter (1a).

12. A wireless mobile communication system according to any of the preceding claims,
**characterised in**
**that** the controllable directional signal wave converter (1a) is formed by a mechanical steerable directional signal wave converter.

13. A wireless mobile communication system according to one of the claims 1 to 11,
**characterised in**
**that** the controllable directional signal wave converter 81a) is formed by an adaptive signal wave converter array.

14. A wireless mobile communication system according to any of the preceding claims,
**characterised in**
**that** the information carrying signal wave is formed by a light wave.

15. A wireless mobile communication system according to one of the claims 1 to 13,
**characterised in**
**that** the information carrying signal wave is formed by a radio wave.

16. A wireless mobile communication system according to claim 15,
**characterised in**
**that** an antenna forms a signal wave converter (1a, 2a).

17. A wireless mobile communication system according to claim 14,
**characterised in**
**that** a signal wave converter (1a, 2a) comprises an electro-optical device.

18. A mobile terminal for a short range wireless communication system according to one of the preceding claims, the mobile terminal comprising a transceiving means (2a, 8) for wirelessly exchanging a signal, a baseband processing means (9) for processing a received or to be transmitted signal in the baseband, and a movement monitoring means (13) for providing tracking data to the baseband processing means for being transmitted by the transceiving means (2a, 8).

19. A first terminal for a short range wireless communication system according to one of the claims 1 to 17, the first terminal comprising a transceiving means (1a, 7) with a directional signal wave converter (1a) for receiving and transmitting data, a baseband processing means (6) for a baseband processing of data received or of data to be transmitted and to extract tracking data provided by a mobile terminal according to claim 18, and a direction adjustment means (4) for adjusting the radiation angle of the directional signal wave converter according to the information present in the tracking data.
